# EUROPÄISCHE PATENTSCHRIFT

(11) **EP 0 824 820 B1**
(45) Veröffentlichungstag und Bekanntmachung des Hinweises auf die Patenterteilung: **05.11.2003**
(21) Anmeldenummer: 96913451.9
(22) Anmeldetag: 02.05.1996
(51) Int. Cl.: H04M 1/72, H04N 1/00

(54) **TRAGBARES FUNKKOMMUNIKATIONS GERÄT MIT INTEGRIERTER KAMERA UND BILDANZEIGEVORRICHTUNG**
PORTABLE RADIO COMMUNICATION DEVICE WITH INTEGRATED CAMERA AND IMAGE DISPLAY DEVICE
APPAREIL DE COMMUNICATION RADIO PORTABLE A CAMERA ET AFFICHEUR INTEGRES

(30) Priorität: 03.05.1995 DE 19516211; 02.08.1995 DE 19528424
(43) Veröffentlichungstag der Anmeldung: 25.02.1998
(73) Patentinhaber: SIEMENS AKTIENGESELLSCHAFT, 80333 München (DE)
(72) Erfinder: KLEINSCHMIDT, Peter, D-81735 München (DE); NIEDERMAIR, Gerhard, D-85256 Vierkirchen (DE)
(86) Internationale Anmeldenummer: DE9600758
(87) Internationale Veröffentlichungsnummer: WO96035288

(56) Entgegenhaltungen:
- EP-A- 0 352 914
- EP-A- 0 472 361
- EP-A- 0 526 802
- EP-A- 0 539 699
- EP-A- 0 626 773
- WO-A-93/16550
- WO-A-94/01958
- US-A- 4 836 670
- US-A- 5 335 276
- IBM TECHNICAL DISCLOSURE BULLETIN, Bd. 37, Nr. 06A, Juni 1994, NEW YORK, Seiten 449-453, XP000455841 "PERSONAL COMMUNICATOR CONFIGURATIONS"

## Beschreibung

Die globale wirtschaftliche und kulturelle Zusammenarbeit nimmt immer mehr zu. Dies führt dazu, daß die Kommunikationsmittel vermehrt ins Zentrum des wissenschaftlichen und industriellen Interesses rücken. Immer häufiger wird es nötig, sich schnell Zugriff auf persönliche oder wirtschaftliche Daten zu verschaffen und daraus direkt Entscheidungen anzuleiten und zu treffen.

Besonders wichtig ist dabei auch die Möglichkeit der visuellen Kommunikation. Teilweise sind diese Möglichkeiten schon durch Bildschirmtelefone und Faxgeräte gegeben. Diese technischen Lösungen tragen jedoch nicht dem Bedürfnis und Erfordernis nach gesteigerter Mobilität des modernen Menschen Rechnung.

Mit zunehmendem Einsatz elektronischer Medien und elektronischer Datenverarbeitung bei allen Arten von wissenschaftlichen und wirtschaftlichen Tätigkeiten wird das Datenaufkommen, das an solchen Geräten zu bewältigen ist, weiter steigen.

WO-A-93 16550 offenbart ein Kommunikationsgerät mit einer Bildanzeigevorrichtung, mit Eingabemitteln, welche es gestatten die Position einer Marke auf einem Bild der Bildanzeigevorrichtung zu verändern, und mit einem Rechner, mit welchem mindestens die Position der Marke in Verbindung mit dem Bild auf der Bildanzeigevorrichtung ausgewertet wird. Das Kommunikationsgerät weist ferner Übertragungsmittel zur Übertragung von von einem CD-Laufwerk gelesenen Daten innerhalb des Kommunikationsgerätes auf.

Die der Erfindung zugrundeliegende Aufgabe besteht darin, ein hochintegriertes mobiles Kommunikationsgerät und eine Kommunikationsanordnung anzugeben.

Diese Aufgabe wird durch ein Kommunikationsgerät gemäß den Merkmalen des Patentanspruchs 1 und durch eine Kommunikationsanordnung gemäß den Merkmalen des Patentanspruchs 9 gelöst.

Weiterbildungen der Erfindung ergeben sich aus den abhängigen Ansprüchen.

Ein besonderer Vorteil des erfindungsgemäßen Kommunikationsgerätes besteht darin, daß es die Möglichkeit bietet, visuelle Kommunikation durchzuführen und gleichzeitig Manipulationen mit dem angezeigten Bildschirminhalt über Eingabemittel durchzuführen.

Dazu weist das erfindungsgemäße Kommunikationsgerät eine optische Bildaufnahmevorrichtung auf, mit welcher Bilder bzw. der Sprechende aufgenommen werden können.

Weiterhin weist das erfindungsgemäße Kommunikationsgerät einen separaten Datenkanal auf, mit welchem höhere Datenkapazitäten übertragen werden können. Dieser Datenkanal kann beispielsweise direkt für die Übertragung von Bilddaten optimiert sein und wird mittels separater Übertragungsmittel angesprochen. Die Übertragungsmittel sind als Infrarot-, Ultraschall-, oder Funkübertragungsmittel realisiert.

Vorteilhafterweise können beim erfindungsgemäßen Kommunikationsgerät Mittel vorgesehen sein, womit eine Pupille des Betrachters, welcher das Gerät benutzt, verfolgt werden kann, so kann unmittelbar darauf geschlossen werden, welcher Bildschirminhalt für den Benutzer des Gerätes momentan interessant ist und die Blickrichtung als Eingabemittel in Verbindung mit dem im Gerät vorhandenen Rechner benutzt werden.

Vorteilhafterweise kann der Rechner im erfindungsgemäßen Kommunikationsgerät Personalcomputer-Funktionalität aufweisen, so können universell verfügbare Softwareprogramme benutzt werden und man braucht nicht zweierlei Geräte mit sich zu führen. Außerdem wird so der Prozessor, der im Gerät vorhanden ist, doppelt genutzt.

Besonders vorteilhaft ist die Bildanzeigevorrichtung des erfindungsgemäßen Kommunikationsgerätes direkt im Funktelefon integriert und der Blick des Betrachters wird über eine geeignete aufklappbare Optik auf den Bildschirm umgelenkt. So ist ein kompaktes Gerät verfügbar, dessen Komponenten ständig miteinander verbunden sind und das leicht durch Aufklappen benutzt werden kann.

Vorteilhafterweise wird der Blick des Betrachters dabei mittels eines Prismas oder halbdurchlässigen Spiegels umgelenkt und durch eine Linse geleitet, um das zu betrachtende Bild zu vergrößern. Vorteilhaft können dabei die Umlenkungsmittel auch halbdurchlässig sein, so daß der Betrachter gleichzeitig das von der Bildausgabevorrichtung angezeigte Bild und die Umgebung betrachten kann.

Vorteilhafterweise kann das erfindungsgemäße Kommunikationsgerät so ausgeführt sein, daß der Rechner und die Bildanzeigevorrichtung in einem Einschubfach integriert sind und beim Betrieb herausgenommen werden können, wobei durch eine separate Übertragungsstrecke die Kommunikation mit dem Funktelefon hergestellt wird. Auf diese Weise können komplexere Anwendungen durchgeführt werden und größere Bilder angezeigt werden.

Vorteilhafterweise sind beim erfindungsgemäßen Kommunikationsgerät kompakte Eingabemittel, wie sie aus den Einsatz von mobilen PC's bekannt sind, integriert.

Vorteilhaft läßt sich eine Kommunikationsanordnung aus mehreren solchen Kommunikationsgeräten realisieren, wobei die Gesprächspartner miteinander Daten und Sprache austauschen können.

Besonders vorteilhaft werden bei einer Kommunikationsanordnung mit dem erfindungsgemäßen Kommunikationsgerät Sprache und Daten wahlweise über das Funknetz oder über ein separates breitbandiges Datennetz übertragen. Vorteilhaft sind für den Zweck der Datenübertragung dabei spezielle Kommunikationsserver vorgesehen, die mittels des separaten breitbandigen Datenkanals erreichbar sind. Beispielsweise sind diese nur lokal vorhanden, können in speziellen Fällen für den Rechner des Gerätes von ihm ausgelagerte komplexe Rechenaufgaben lösen.

Ein besonderer Vorteil des erfindungsgemäßen Kommunikationsgerätes besteht darin, daß es einen klappbaren Kleinstbildschirm aufweist, weil dieser erstens nicht verloren gehen kann und zweitens als Abdeckung zum Schutz des Gerätes dienen kann.

Besonders vorteilhaft weist das erfindungsgemäße Kommunikationsgerät einen Hohlspiegel zur Abbildung des Kleinstbildschirmes auf, da so auf eine Linse verzichtet werden kann.

Vorteilhaft ist es beim erfindungsgemäßen Kommunikationsgerät vorgesehen, seitenverkehrte oder über Kopf stehende Darstellungen durch optische oder elektronische Mittel zu korrigieren.

Vorteilhaft weist das erfindungsgemäße Kommunikationsgerät einen Speicher auf, in welchen Daten abgelegt werden können, so kann auch Off-Line mit dem Gerät ein sinnvoller Betrieb ermöglicht werden.

Vorteilhaft weist das erfindungsgemäße Kommunikationsgerät eine Schreib- und Lesevorrichtung auf, da so leicht Zugangsberechtigungen überprüft werden können.

Günstig kann mit dem erfindungsgemäßen Kommunikationsgerät auch ein Datenträger beschrieben oder gelesen werden, da so eine preiswerte Datenspeicherungsalternative vorliegt, mit der Datenbankinhalte oder personenspezifische Daten einund/oder ausgelesen werden können.

Besonders vorteilhaft weist das erfindungsgemäße Kommunikationsgerät Sprach- Ein- oder Ausgabemittel auf, da so ohne Verwendung der Hände, Kommandos an das Gerät gegeben werden können bzw. ohne die Augen Meldungen vom Gerät vernommen werden können.

Im folgenden wird die Erfindung anhand von Figuren weiter erläutert.
Figur 1 zeigt ein Beispiel eines erfindungsgemäßen Kommunikationsgerätes.
Figur 2 zeigt ein erfindungsgemäßes Kommunikationsgerät mit herausgenommenem Rechner und Anzeigeteil.
Figur 3 zeigt ein Beispiel eines erfindungsgemäßen Kommunikationsgerätes mit integrierter Optik und Eingabemitteln.
Figur 4 zeigt eine Ausführungsform einer Bildanzeigevorrichtung.
Figur 5 zeigt eine Ausführung einer Bildanzeigevorrichtung. Figur 6 gibt ein Beispiel eines Blockschaltbildes, der im erfindungsgemäßen Kommunikationsgerät vorhanden elektronische Komponenten an.

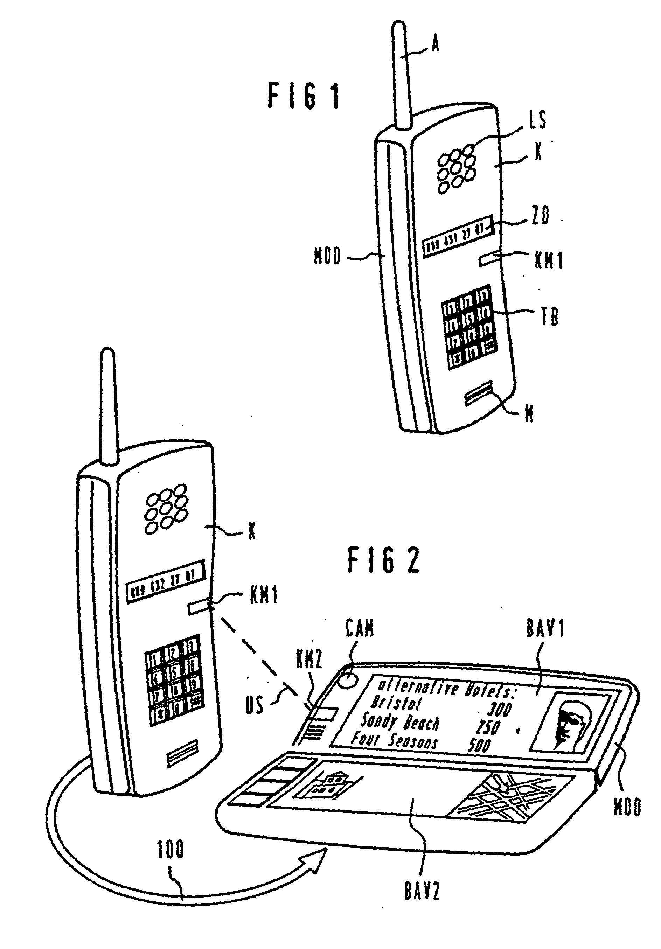

Figur 1 zeigt ein erfindungsgemäßes Kommunikationsgerät K, welches im wesentlichen einem Funktelefon gleicht. Es besitzt eine Antenne A, einen Lautsprecher LS und ein Mikrophon M. Zur Nummernwahl ist ein Tastaturbereich TB vorgesehen. Gewählte Telefonnummern werden über ein Zifferndisplay ZD angezeigt. Bei diesem Ausführungsbeispiel des erfindungsgemäßen Kommunikationsgerätes ist beispielsweise der Rechner und die Bildanzeigevorrichtung in einem Modul MOD eingebaut, welches aus dem Funktelefon herausgenommen werden kann. Eine Verbindung zwischen dem Rechner und dem Kommunikationsgerät K wird dann über ein Kommunikationsmittel KM1 hergestellt. Dieses Kommunikationsmittel kann beispielsweise eine Infrarotstrecke, oder eine Funkstrecke sein. Für schmalbandigere Anwendungen bietet sich dafür auch eine Ultraschallverbindung an. Insbesondere gilt dies wenn über die Verbindung lediglich zwei Grundgeräte MOD und K kommunizieren..

Das Kommunikationsmittel KM1 kann beispielsweise auch genutzt werden, um lokal eine Datenübertragungsverbindung mit einer höheren Datenübertragungsrate herzustellen, als diese einem Funktelefonnetz möglich ist. Hierzu können beispielsweise an bestimmten Örtlichkeiten, beispielsweise auch in geschlossenen Räumen Netzzugänge vorgesehen sein, mit deren Hilfe eine Datenübertragungsverbindung aufgebaut werden kann. Beispielsweise können diese Netze Server enthalten, die dem Kommunikationsgerät K auch eine Rechenkapazität zur Verfügung stellen, um den im Gerät integrierten Rechner, hier im Modul MOD, zu entlasten.

Für schnelle Kommunikation über größere Entfernungen stehen jedermann schon Telefone und Faxgeräte zur Verfügung. Neuere Entwicklungen sind hier Bildtelefon und Kommunikationsanwendungen auf vernetzten Computern, die es zulassen, Bewegtbilder und Multimediadokumente auszutauschen und gemeinsam zu bearbeiten. Für die weltweit universelle Erreichbarkeit einer Person unter einer Nummer entwickelt sich das zellulare, durch Satelliten gestützte Handy als attraktivste Lösung. Bei Nichterreichbarkeit werden Anrufbeantworter und Mail- und Phonemail-Systeme eingesetzt. Für die Zukunft sind "Intelligente Nebenstellenanlagen" im Gespräch, die entsprechend einem Nutzerprofil Gespräche und Faxe beispielsweise auf andere Geräte umleiten, oder sogar Text und Sprache umwandeln und vorlesen oder gesprochene Anrufe niederschreiben und als Fax oder Text einer Bildanzeigevorrichtung ausgeben können. Beispielsweise kann für den Schutz des Individuums vor unerwünschter Informationsbelästigung ein Automat im Netz vorgesehen sein (Telefonzentralen, Server, Nebenstellenanlagen) oder beim Endkunden installiert (Anrufbeantworter oder Mail-Service) sein, der Anrufe auf andere Endgeräte umlenkt oder zur späteren Auswertung bereithält.

Für jedes Problem gibt es zwar eine dedizierte Lösung, die für sich alleine genommen dem jeweils erstrebten Ziel nahekommt. Insgesamt erweist sich die technische Vielfalt als zu kontraproduktiv, um weltweit eine für den Benutzer deutliche,' effektive Erweiterung seiner Aktionsfähigkeit zu erreichen. Bei dem erfindungsgemäßen Kommunikationsgerät geht es beispielsweise um die Zusatzfunktionen Daten-, Bild- und Video-Display und eine Kamera für Bildtelefon und Videokonferenz. Der Grundvorteil für den Nutzen dieser Lösungen ist, daß das Funktelefon - Handy aufgrund der Hauptqualität (Telefonieren) sowieso akzeptiert ist. Universelle Erreichbarkeit mit einer Nummer weltweit (z.B. private Telefonzentrale im Handy und stille Weiterleitung des Anrufs oder Faxes an andere Geräte) kann so sichergestellt werden. Auch Wandlung von Sprache und Text (Fax- oder Bildschirmanzeige) oder Text nach Sprache (maschinelles Vorlesen von Mail und Fax) und automatische Fremdsprachenübersetzung liegen so im Rahmen eines erfindungsgemäßen Kommunikationsgerätes.

Figur 2 zeigt ein Beispiel eines erfindungsgemäßen Kommunikationsgerätes, bei dem der Rechner als Modul MOD in Verbindung mit Bildanzeigevorrichtungen BAV1 und BAV2 herausgenommen werden kann. Die Herausnehmbarkeit aus dem Grundgerät ist durch einen Pfeil 100 am Funktelefon dargestellt. Im herausgenommenen Zustand hält das Modul MOD mit dem Grundgerät über eine Übertragungsstrecke US Verbindung. Hierzu sind Kommunikationsmittel KM1 und KM2 vorgesehen. Beispielsweise ist im herausgenommenen Modul eine Bildaufnahmevorrichtung CAM integriert. An der Bildanzeigevorrichtung BAV1 und BAV2 können beispielsweise Datenbankinhalte, Gesprächspartner mit denen kommuniziert wird oder andere Informationen, beispielsweise Faxmitteilungen, angezeigt werden. Die Eingabemittel können beispielsweise am Gerät K oder am Modul MOD vorgesehen sein. Beispielsweise kann mit den Eingabemitteln eine Auswahl aus dem angezeigten Bildschirminhalt getroffen werden. Hier beispielsweise kann eine Hotelbuchung vorgenommen werden, indem eines der angezeigten Hotels ausgewählt wird. Es sind aber auch Bankgeschäfte denkbar oder andere visuelle, textuelle Kommunikationsvorgänge.

In dem aufgeklappten Displayteil MOD ist beispielsweise eine Batterie und eine Elektronik (Prozessor, Speicher, Betriebsund Anwendungssoftware, Infrarot- oder Funkverbindung zum Handy hin und gegebenenfalls zu einem im Raum installierten Breitbandnetz, Richtungssteuertasten und ggf. ein Stift mit dem auf dem Bildschirm geschrieben, gezeichnet und vor allem interaktiv navigiert werden kann, eine CCD-Kamera gegebenenfalls auch Mikrofon und Lautsprecher) vorgesehen. Beispielsweise können während des Telefonierens Daten, Texte, Bilder, Filme des Gesprächspartners angezeigt werden, eigene Daten gesucht und angezeigt werden (z.B. Adressen, Termine, Artikel, usw.). Das Navigieren kann mit den Eingabemitteln am Display BAV1 und BAV2 erfolgen. Dank der eingebauten Kamera kann der Sprechende beim Teilnehmer gesehen werden, die Kamera kann auch zum Fotografieren von Gegenständen benutzt werden, sei es für einen selbst, für die spätere Weiterverarbeitung, oder zur unmittelbaren Übertragung an den oder die Gesprächspartner.

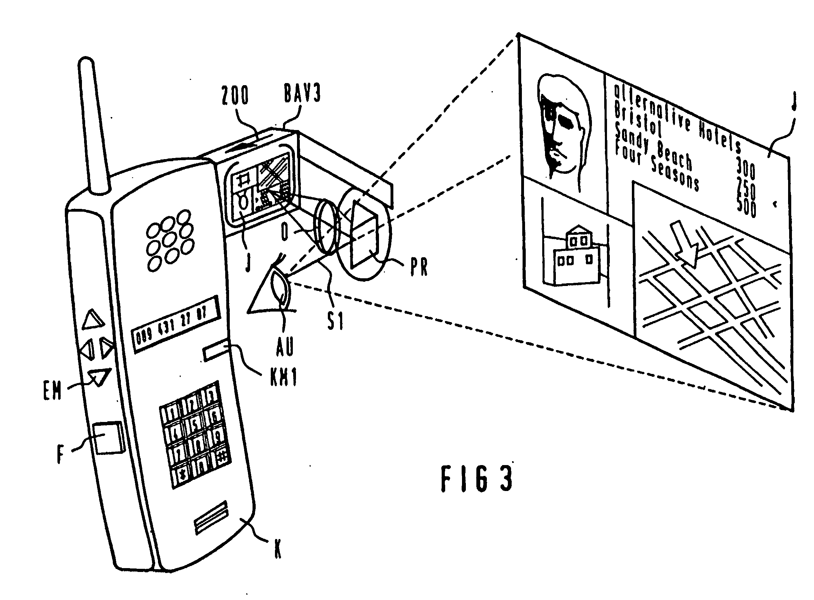

Figur 3 zeigt ein weiteres Ausführungsbeispiel eines erfindungsgemäßen Kommunikationsgerätes K. Bei all den besprochenen Figuren, auch den Figuren 1 und 2, sind alle Bezeichnungen gleich gewählt und da das Gerät in gleicher Form dargestellt wird, sind zur Wahrung der Übersichtlichkeit nur die wesentlichen Komponenten bezeichnet.

Bei dieser Variante des erfindungsgemäßen Kommunikationsgerätes ist beispielsweise die Bildanzeigevorrichtung BAV3 in das Gerät selbst integriert. Hier sind beispielsweise die Eingabemittel EM und F an einer Gehäuseseite des erfindungsgemäßen Kommunikationsgerätes K angebracht. Beispielsweise sind hier Richtungspfeiltasten in Verbindung mit einer Feuertaste F, mit der eine Auswahl bestätigt wird, vorgesehen. Es können jedoch ohne weiteres auch andere dem Fachmann geläufige Mittel, wie ein Trackball, Touchpad oder eventuell ein Minijoystick vorgesehen sein.

Beispielsweise ist hier in dieser Ausführungsvariante im Bereich der Hörkapsel eine Bildwiedergabe-Einrichtung BAV3 (Private Eye), z.B. in Form eines beleuchteten Flüssigkristalldisplays vorgesehen. Das Bild wird dabei beispielsweise über eine Einspiegelungsvorrichtung mit der vom Auge AU normalerweise wahrgenommenen Szene gemischt. Eine Einspiegelungsvorrichtung besteht z.B. aus einem Okular O, das dem Bildschirm ins Unendliche abbildet und einen Strahlenteiler (teildurchlässiger 45°-Spiegel oder halbdurchlässiges Prisma PR, gezeichnet ist ein Prisma mit einem auf der Hypothenuse aufgedampften halbdurchlässigen Spiegel). Bei Nichtgebrauch wird vorteilhafterweise die dargestellte Optik zusammengeklappt und mit der Bildwiedergabeeinrichtung ganz oder teilweise im Handy versenkt. Dies ist hier durch einen Pfeil 200 angedeutet. Der Strahlengang, der vom Auge des Betrachters AU ausgeht, ist hier beispielsweise zur Verdeutlichung anhand eines Strahls S1 dargestellt. Einmal ist die Information I auf der Bildanzeigevorrichtung BAV3 dargestellt und zum anderen Mal ist I vergrößert dargestellt, wie sie der Betrachter sieht. Vorteilhafterweise kann am erfindungsgemäßen Kommunikationsgerät auch ein System zur Messung der Blickrichtung des Betrachters (Eye Tracker) im Private Eye montiert sein. Der Eye Tracker verfolgt die Lage der Augenpupille beispielsweise mit einer kleinen in BAV3 integrierten Kamera und detektiert die Blickrichtung des Betrachters. Im Handy ist hier eine Elektronik (Prozessor, Speicher, Betriebs- und Anwendungssoftware), Infrarot- oder Funkverbindung KM1 zu einem im Raum installierten Breitbandnetz vorhanden. Durch den Anschluß an das Breitbandnetz ergeben sich zwei Vorteile. Das Handy kann Breitbanddienste, wie Video- und Bildtelefon nutzen, sowie umfangreiche Daten mit hoher Geschwindigkeit anfordern, zeigen und versenden. Zweitens können rechenintensive Aufgaben ohne Störung und Pausen auf Stationärserver verlagert werden. Der besondere Vorteil dieser Lösung besteht darin, daß sie einhändig bedienbar, leicht zu handhaben und nicht zu verlieren ist.

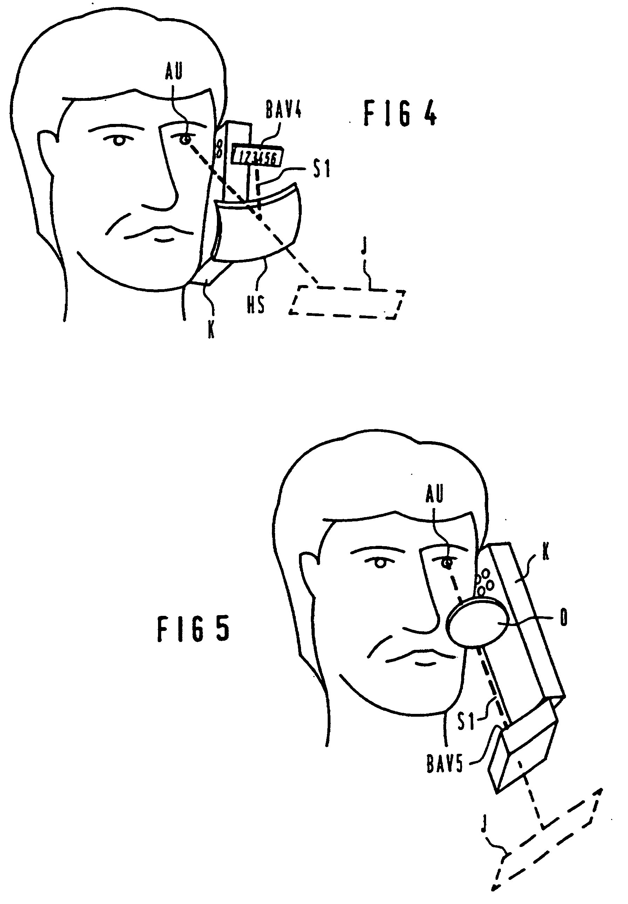

In Figur 4 ist eine vorteilhafte Ausgestaltung einer Bildanzeigevorrichtung für das erfindungsgemäße Kommunikationsgerät dargestellt. Das anzuzeigende Bild wird beispielsweise über eine Bildanzeigevorrichtung BAV4 dargestellt. Üblicherweise kann diese Bildanzeigevorrichtung ein Kleinstmatrixdisplay sein, welches vorteilhafterweise auch so angeordnet sein kann, daß mit dem in Figur 1 vorhandenen Zahlendisplay ZD identisch ist. Weiterhin ist der optische Strahlengang S1 dargestellt, welcher vom Display BAV4 über einen Hohlspiegel HS zum Auge des Betrachters AU geführt wird. Durch den Hohlspiegel HS wird das Bild, welches auf der Bildanzeigevorrichtung BAV4 dargestellt wird, in einem virtuellen Bild I vergrößert angezeigt. Der Hohlspiegel HS ist beispielsweise am Kommunikationsgerät K angebracht und günstigerweise kann er durch geeignete Vorrichtungen abgeklappt oder im Gerät versenkt werden.

Beispielsweise können nicht dargestellte Servomechanismen vorgesehen sein, welche beim Betrieb des Telefones automatisch die Anzeigevorrichtung und den Hohlspiegel in die richtige Position bringen. Weiterhin kann vorteilhaft die Seitenumkehr und die Überkopf-Darstellung, die durch die Betrachtung eines gespiegelten Bildes entsteht mittels elektronischer oder weiterer Komponenten korrigiert werden. Das mit einer Betrachteranordnung ins Blickfeld gebrachte zusätzliche Videodisplay kann identisch mit dem gewöhnlich vorhandenen Telefondisplay sein. Voraussetzung ist die blickgünstige Montage auf dem Gerät, ausreichende Auflösung und eine passende optische Abbildung mit Linsen, Spiegeln und/oder Prismen ins Auge des Betrachters AU. Seitenverkehrte und/oder kopfstehende Bilder können optisch oder elektronisch in die gewohnte normale Lage gebracht werden. Wie Figur 4 zeigt, bewirkt ein Hohlspiegel, welcher auch teildurchlässig sein kann, eine Strahlumlenkung, Vergrößerung des Bildes und Verlagerung des Bildortes I in eine größere Entfernung.

Figur 5 zeigt eine vorteilhafte Ausgestaltung einer Bildanzeigevorrichtung für das erfindungsgemäße Kommunikationsgerät. In Figur 5 ist das Kommunikationsgerät K dargestellt, welches eine Bildanzeigevorrichtung BAV5 integriert enthält. Diese Bildanzeigevorrichtung besteht beispielsweise in einem Kleinstmatrixdisplay, welches abklappbar oder einschiebbar am Gehäuse K des Kommunikationsgerätes vorgesehen ist. Vorzugsweise kann die klappbare Bildanzeigevorrichtung zur Abdeckung empfindlicher Teile des Gerätes dienen. Der Strahlengang eines telefonierenden Betrachters S1 wird vom Auge AU durch eine Optik, vorzugsweise eine Vergrößerungslinse O auf die Bildanzeigevorrichtung BAV5 gelenkt. Hierdurch wird ein vergrößertes virtuelles Bild erzeugt. Für die kostengünstige Herstellung dieser optischen Anzeigevorrichtung muß diese nicht so perfekt ausgebildet sein. In einfachen Fällen mag bereits ein übliches, ggf. nicht einmal beleuchtetes Flüssigkristall-Display genügen, das im Blickwinkel des Telefonierenden befestigt ist, wie z.B. an einem herausklappbaren Teil am Fuße des Handys und mittels einer Lupe vergrößert und in angenehmer Sehweite betrachtet werden kann. Beispielsweise wird in dieser Ausführungsform der Bildanzeigevorrichtung auf die Halbdurchlässigkeit des Displaybildes verzichtet. In einer verschlechterten Ausführung kann beispielsweise die Baulänge des Kommunikationsgerätes K, oder ausklappbare Teile so bemessen sein, daß auf eine Lupe ganz verzichtet werden kann. Auch die Montage einer Kamera zur Bild- oder Filmaufnahme des Benutzers kann hier vorgesehen werden. Dem Fachmann für die darstellende Optik sind viele Varianten mit Spiegeln, Prismen, Linsen und/oder Hohlspiegeln denkbar, die den gleichen Effekt, wie die dargestellte Ausführungsform erzielen, aber freizügiger in der Wahl des Ortes für das Display sind und bei kleinerer Baulänge des Kommunikationsgerätes stärkere Vergrößerungen mittels der Betrachteroptik zulassen. Neuerdings sind für die Darstellung geeignete Displays bekannt geworden, welche aus mikromechanischen Displays bestehen, die bei einer Kantenlänge von ca. 2 cm eine Auflösung von 2048 x 1152 farbigen Pixeln aufweisen. Beispielsweise bestehen diese Displays aus mikromechanisch aus Silizium geätzten Kippspiegeln, welche elektrostatisch angetrieben werden. Diese im Reflexionsbetrieb arbeitenden Displays werden von einer kleinen Lichtquelle beleuchtet und sind besonders stromsparend, also besonders geeignet für die Anwendung im erfindungsgemäßen Kommunikationsgerät.

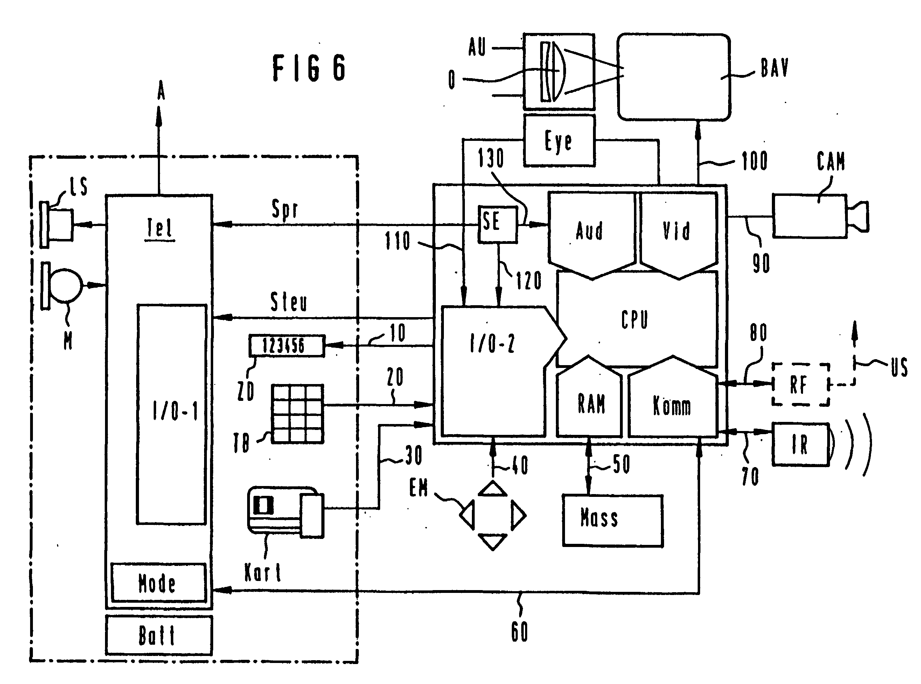

Figur 6 zeigt das Beispiel eines Blockschaltbildes für die elektronischen Komponenten eines erfindungsgemäßen Kommunikationsgerätes. Vorzugsweise besteht die Telefonkomponente des erfindungsgemäßen Kommunikationsgerätes aus einem Telefonschaltkreis Tel, welcher mit einem Lautsprecher LS und einem Mikrophon M gekoppelt ist. Weiterhin weist dieses Telefon zur Bedienung der restlichen Komponenten des erfindungsgemäßen Kommunikationsgerätes einen Ein- und Ausgabeschaltkreis I/O-1 auf. Vorzugsweise ist dem Telefon Tel ein Modem Mode integriert zum Datenaustausch per Funk. Weiterhin weist das Gerät einen Akkumulator Batt auf. Weiterhin ist eine Ziffernanzeige ZD und ein Tastaturblock TB vorgesehen. Vorzugsweise besitzt das Gerät auch eine Datenlese und/oder Schreibvorrichtung Kart. Weiterhin weist das Gerät, beispielsweise in einem separat als Modul herausnehmbaren Teil, wie in Figur 2 dargestellt, weitere Schaltkreise auf. Dort sind beispielsweise eine Ausgabeeinheit I/O-2 vorgesehen, welche über eine Datenleitung 40 mit den Eingabemitteln EM kommuniziert. Als zentraler Bestandteil ist beispielsweise ein Prozessor CPU vorgesehen, welcher einen Speicher RAM und Kommunikationsmittel Komm besitzt. Weiterhin sind Sprachein- und/oder -ausgabe sowie Bildein- und/oder -ausgabemittel Aud und Vid vorgesehen. Die Bildverarbeitungsmittel Vid kommunizieren beispielsweise über eine Leitung 90 mit einer Kamera CAM. Die Kommunikationsmittel Komm weisen beispielsweise Datenverbindungen zu Schmalband- und Breitbandsendern IR und RF auf, wobei der Schmalbandsender über die Leitung 70 und der Breitbandsender über die Leitung 80 bedient wird. Der Breitbandsender RF kann beispielsweise die Übertragungsstrecke US bedienen, welche in Figur 2 dargestellt ist.

Weiterhin zeigt Figur 6, daß ein Permanentspeicher Mass vorgesehen sein kann. Dieser wird beispielsweise vom flüchtigen Speicher RAM über eine Datenleitung 50 mit Daten versorgt oder umgekehrt. Das im Telefon Tel vorhandene Modem Mode kann beispielsweise für eine Datenleitung 60 mit der Kommunikationseinrichtung Komm kommunizieren. Weiterhin weist das Gerät, schematisch dargestellt, eine Bildanzeigevorrichtung BAV auf. Diese Bildanzeigevorrichtung wird von der Bildverarbeitungseinheit Vid mittels einer Datenleitung 100 versorgt. Weiterhin ist hier dargestellt, eine Augenverfolgungseinrichtung des Betrachterauges Au, welche mit Eye bezeichnet ist. Diese Augenverfolgungseinrichtung wird durch die Bildverarbeitungseinheit Vid mittels einer Datenleitung 110 mit Daten vorsorgt und umgekehrt. Das Betrachterauge Au wird beispielsweise mittels einer Optik O betrachtet und die Augenverfolgungseinrichtung Eye gibt ihre Daten über die Datenleitung 110 an die Ein-Ausgabeinheit I/O-2 weiter. Vorzugsweise ist im erfindungsgemäßen Kommunikationsgerät auch eine Spracheinund/oder Sprachausgabeeinheit SE vorgesehen. Diese kommuniziert beispielsweise mit dem Telefonschaltkreis Tel über eine Leitung Spr. Vom Prozessor können beispielsweise Daten für die Ein- und Ausgabe oder andere Telefonfunktionen über eine Steuerleitung Steu an den Telefonschaltkreis gemeldet werden. Weiterhin sind Datenleitungen 10 bis 30 vorgesehen, welche der Ein- und Ausgabeeinheit I/O-2 die Daten des Zifferndisplays ZD des Tastaturblocks TB und der Leseschreibvorrichtung Kart zugänglich machen.

In Figur 6 werden vorzugsweise alle für die Erfindung wichtigen Komponenten benannt und miteinander in den funktionalen Zusammenhang gebracht. Vorzugsweise kann über die Antenne A das Telefon mittels GSM - bzw. Satelliten-Sende-Empfangstechnik, oder anderer bekannter funkgesteuerter Telefonverbindungsmöglichkeiten kommunizieren. Das Display ZD bringt beispielsweise Rufnummern, Namen oder Betriebszustände zur Anzeige. Weiters ist ein Ziffernblock TB vorgesehen, über welchen Rufnummern eingegeben werden können. Die Leseund/oder Schreibvorrichtung Kart ist vorzugsweise für Chip-Karten oder Magnetstreifen ausgelegt. Damit kann beispielsweise die Zugangsberechtigung vom Telefonnetz, die Hoch- und Niederfrequenz-Nachrichtentechnik zum Senden, Empfangen, Modulieren, Demodulieren sowie Kodieren und Dekodieren der Sprache sowie Schaltungskomponenten mit der Funktion des Einund Ausgabecontrollers I/O-1 bedient werden. Der Ein- und Ausgabekontroller I/O-2 sorgt beispielsweise dafür, daß die verschiedenen Signale, die von der Tastatur TB, den Display ZD, den Kartenleser Kart usw. bestimmungsgemäß verarbeitet werden. Mit dem Modem Mode können beispielsweise Daten von Computern, z.B. vom integrierten Rechner CPU zu anderen Computern übertragen werden. Mit der Spracherkennungsschaltung SE beispielsweise werden gesprochene Zahlen erkannt und in Zählvorgänge umgewandelt. Der Massenspeicher Mass besteht beispielsweise aus einem Schreib/-Lesespeicher in Form einer Festplatte und/oder als Flash-RAMs oder batteriegepufferte RAMs. Die Kommunikationsschnittstelle Komm dient vorzugsweise zum Anschluß von weiteren Modems, sowie Audio- und Video-Schnittstellen und zur Umwandlung von analogen Sprach- und Musiksignalen und von der Kamera kommenden Videoströmen in prozessorverarbeitbare Digitalwerte, sowie zur Erzeugung von akustischen Signalen und Videobildern aus den prozessorverarbeiteten Digitalwerten. Für die Navigation sind Navigatoren in Form von Eingabemitteln EM, wie beispielsweise Richtungstasten, Schiebe- und Drehregler, Rollkugeln, Mäuse, Joysticks, Touch Pads und Eye Tracker vorgesehen. Die abgegebenen Datenströme werden vorzugsweise vom Ein- und Ausgabekontroller I/O-2 koordiniert. Vorzugsweise weist die Spracheinheit SE einen Spracherzeuger auf, der Texte in akustische Sprachsignale umwandelt. Die Schmalbandschnittstelle IR besteht vorzugsweise aus einem mit dem Prozessor CPU verbunden Kommunikationsteil, der die notwendigen Protokolle zum Datenaustausch bereitstellt und aus einer Infrarotsende- und einer Infrarotempfängerdiode, sowie den zugehörigen Treibern und Empfängerschaltungen. Für breitbandige Übertragungen kann eine Hochfrequenzübertragungseinrichtung RF verwendet werden. Die Bildanzeigevorrichtung BAV besteht beispielsweise aus einer Sucheranordnung, bei der dem Auge nicht ein rein optisch erzeugtes, sondern ein von den Videokamerachip der Kamera CAM erzeugtes elektronisches Bild gezeigt wird. Dazu wird das Bild auf einer miniaturisierten Kathodenstrahlröhre oder auf einem von hinten durchleuchteten Flüssigkristall erzeugt. Um hohen Kontrast zu erzielen, wird ein aktives FlüssigkristallDisplay vorzugsweise verwendet. Zur Erzielung höherer Auflösung bei kleinen Abmessungen, werden beispielsweise die aktiven Transistoren in polykristallinem Silizium gefertigt. Vorzugsweise wird das erzeugte Bild mittels einer Optik so vergrößert und in einem angenehmen Abstand vom Auge präsentiert. Diese Optik ist dabei meist eine Lupe, wobei vorzugsweise mittels eines Dioptrienausgleichs die Lage des Bildes frei gewählt werden kann.

## Patentansprüche

1. Kommunikationsgerät (K) mit eingebautem Funktelefon,
- welches eine Bildanzeigevorrichtung (BAV1; BAV2) aufweist,
- welches Eingabemittel (EMiF) aufweist, welche es gestatten die Position einer Marke auf einem Bild der Bildanzeigevorrichtung zu verändern,
- das einen Rechner (CPU) aufweist, mit welchem mindestens die Position der Marke in Verbindung mit dem Bild auf der Bildanzeigevorrichtung ausgewertet wird,
- und das neben dem Sender und Empfänger des Funktelefones separate Übertragungsmittel (US) für die Übertragung von Bilddaten zur Datenübertragung unabhängig vom Funktelefon aufweist, die mindestens zur Übertragung von solchen Datenraten dienen, die die Übertragungskapazität der Funktelefonübertragungsstrecke übersteigen,
**dadurch gekennzeichnet,**
- **daß** das Kommunikationsgerät (K) eine Bildaufnahmevorrichtung (CAM) aufweist und
- **daß** die Übertragungsmittel (US) als Infrarot- und/oder Ultraschall- und/oder Funkübertragungsstrecke ausgebildet sind.

2. Kommunikationsgerät nach Anspruch 1, das Mittel zur Verfolgung der Pupille des Betrachters der Bildanzeigevorrichtung aufweist und bei dem der Rechner die Blickrichtung eines Betrachters in Verbindung mit dem Bild auswertet.

3. Kommunikationsgerät nach einem der vorangehenden Ansprüche, bei dem der Rechner als Personalcomputer ausgebildet ist.

4. Kommunikationsgerät nach einem der vorangehenden Ansprüche, bei dem die Bildanzeigevorrichtung im Gehäuse des Funktelefones integriert ist, wobei sie eine auskläppbare optische Umlenkvorrichtung aufweist, die beim Telefonieren mit dem Funktelefon den optischen Strahlengang zum Auge des telefonierenden Betrachters umlenkt.

5. Kommunikationsgerät nach Anspruch 4, bei dem die Bildanzeigevorrichtung eine Linse aufweist, welche das Bild ins Unendliche abbildet und eine Einspiegelungsvorrichtung, welche einen halbdurchlässigen Spiegel oder ein Prisma aufweist.

6. Kommunikationsgerät nach einem der Ansprüche 1 bis 3, bei dem der Rechner und die Bildanzeigevorrichtung als separate Einheit ausgeführt sind, welche aus dem Gehäuse des Funktelefones herausgenommen werden kann, wobei für diesen Fall Mittel vorgesehen sind, welche die Kommunikation der separaten Einheit mit dem Funktelefon ermöglichen.

7. Kommunikationsgerät nach einem der vorangehenden Ansprüche, bei dem die Eingabemittel Richtungspfeiltasten, einen Trackball, oder ein Touch-Pad aufweisen.

8. Kommunikationsgerät nach einem der vorangehenden Ansprüche, bei dem Mittel vorgesehen sind zur Umwandlung von Text in Sprache und/oder umgekehrt.

9. Kommunikationsanordnung bestehend aus mindestens einem ersten Kommunikationsgerät nach einem der vorhergehenden Ansprüche und einem zweiten Kommunikationsgerät, bei der eine Datenübertragung zwischen den Kommunikationsgeräten unabhängig vom Funktelefon über mindestens einen Datenkanal erfolgt.

10. Kommunikationsanordnung nach Anspruch 9, bei der die Datenübertragung über einen per Funk.oder Infrarot erreichbaren Kommunikationsserver erfolgt, wobei die Kommunikation über den Server stattfindet, welcher auch Rechenaufgaben übernimmt, welche ihm vom Rechner übertragen werden.

## Claims

1. Communication device (K) with integrated radio telephone,
- which has an image display device (BAV1; BAV2),
- which has input means (EmiF) which permit the position of a mark on an image of the image display device to be changed,
- which has a computer (CPU) with which at least the position of the mark is evaluated in conjunction with the image on the image display,
- and which, in addition to the transmitter and receiver of the radio telephone, has separate transmission means (US) for the transmission of image data for transmitting data independently of the radio telephone, said means being used at least to transmit data rates which exceed the transmission capacity of the radio telephone transmission link,
**characterized**
- **in that** the communication device (K) has an image recording device (CAM) and
- **in that** the transmission means (US) are designed as an infrared link and/or an ultrasonic link and/or a radio transmission link.

2. Communication device according to Claim 1, having means for tracking the pupil of the viewer of the image display device, and in which the computer evaluates the viewing direction of a viewer in conjunction with the image.

3. Communications device according to one of the preceding claims, in which the computer is designed as a personal computer.

4. Communication device according to one of the preceding claims, in which the image display device is integrated in the housing of the radio telephone, said image display device having a fold-open optical deflection device which deflects the optical beam path to the eye of the viewer when he is making a call with the radio telephone.

5. Communication device according to Claim 4, in which the image display device has a lens which represents the image into infinity and a reflection device which has a semi-translucent mirror or a prism.

6. Communication device according to one of Claims 1 to 3, in which the computer and the image display device are designed as a separate unit which can be removed from the housing of the radio telephone, means, which make communication between the separate unit and the radio telephone possible, being provided for this case.

7. Communication device according to one of the preceding claims, in which the input means have direction arrow keys, a trackball or a touch pad.

8. Communication device according to one of the preceding claims, in which means are provided for converting text into speech and/or vice versa.

9. Communication arrangement comprising at least a first communication device according to one of the preceding claims and a second communication device, in which a data transmission between the communication devices takes place independently of the radio telephone via at least one data channel.

10. Communication arrangement according to Claim 9, in which the data transmission takes place via a communication server which can be accessed by radio or infrared, the communication taking place via the server, which also performs computational tasks which are transmitted to it by the computer.

## Revendications

1. Appareil de communication (K) avec radiotéléphone incorporé
- comportant un dispositif d'affichage d'images (BAV1; BAV2),
- comportant des moyens de saisie (EM; F), qui permettent de modifier la position d'une marque sur une image du dispositif d'affichage d'images,
- comportant un ordinateur (CPU), avec lequel au moins la position de la marque peut être évaluée en liaison avec l'image sur le dispositif d'affichage d'images,
- et comportant, en plus de l'émetteur et du récepteur du radiotéléphone, des moyens séparés de transmission (US) destinés à la transmission de données image indépendamment du radiotéléphone, lesquels servent au moins à la transmission de débits binaires tels qu'ils sont supérieurs à la capacité de transmission de la ligne de transmission du radiotéléphone,
**caractérisé par le fait**
- **que** l'appareil de communication (K) comporte un dispositif de prise de vues (CAM) et
- **que** les moyens de transmission (US) sont conçus en tant que ligne de transmission à infrarouge et/ou à ultrasons et/ou ligne de transmission par radio.

2. Appareil de communication conforme à la revendication 1 comportant des moyens pour la poursuite de la pupille de l'observateur du dispositif d'affichage d'images et dans lequel l'ordinateur évalue la direction de visée d'un observateur en liaison avec l'image.

3. Appareil de communication selon l'une des revendications précédentes dans lequel l'ordinateur est conçu comme ordinateur personnel.

4. Appareil de communication selon l'une des revendications précédentes dans lequel le dispositif d'affichage d'images est intégré dans le boîtier du radiotéléphone et comporte, en même temps, un dispositif optique de déviation dépliable, qui fait dévier, lorsqu'on téléphone avec le radiotéléphone, le faisceau optique vers l'oeil de l'observateur en train de téléphoner.

5. Appareil de communication selon la revendication 4 dans lequel le dispositif d'affichage d'images comporte une lentille, qui reproduit l'image à l'infini, et un dispositif de réflexion, qui comporte un miroir semi-transparent ou un prisme.

6. Appareil de communication selon l'une des revendications 1 à 3 dans lequel l'ordinateur et le dispositif d'affichage d'images sont exécutés comme unités séparées, qui peuvent être sorties du boîtier du radiotéléphone, des moyens étant prévus pour ce cas, qui permettent la communication de l'unité séparée avec le radiotéléphone.

7. Appareil de communication selon l'une des revendications précédentes dans lequel les moyens de saisie comportent des touches de direction, une boule de pointage (ou, en anglais, trackball) ou un bloc à contact (ou, en anglais, touch-pad).

8. Appareil de communication selon l'une des revendications précédentes dans lequel il est prévu des moyens destinés à la conversion de texte en paroles et/ou inversement.

9. Système de communication composé de au moins un premier appareil de communication selon l'une des revendications précédentes et d'un deuxième appareil de communication, dans lequel a lieu une transmission de données entre les appareils de communication, indépendamment du radiotéléphone, par l'intermédiaire d'un canal de données.

10. Système de communication selon la revendication 9, dans lequel la transmission de données se fait par l'intermédiaire d'un serveur de communication accessible par radio ou par infrarouge, la communication se faisant par l'intermédiaire du serveur qui prend en charge des tâches de calcul qui lui sont transférées par l'ordinateur.
